# EUROPEAN PATENT APPLICATION

(11) **EP 3 029 586 A1**
(43) Date of publication of application: **08.06.2016**
(21) Application number: 15193860.2
(22) Date of filing: 10.11.2015
(51) Int. Cl.: G06F 17/30

(54) **SERVER APPARATUS AND METHOD FOR PROVIDING SEARCH RESULT THEREOF**

(30) Priority: 03.12.2014 KR 20140172319
(71) Applicant: Samsung Electronics Co., Ltd., Gyeonggi-do 16677 (KR)
(72) Inventor: KIM, Byung-sang, Gyeonggi-do (KR); PARK, Sung-yun, Gyeonggi-do (KR); BOHARA, Manmohan Singh, Suwon-si (KR); SEO, Myung-won, Incheon (KR)
(74) Representative: Taor, Simon Edward William

(57) **Abstract**

A server apparatus and a method for providing a search result are provided. The server apparatus according to an exemplary embodiment includes a search word processor configured to search for contents related to a search word from a plurality of search domains, a rule application determining unit configured to determine a decision rule to be applied for an arrangement order of the searched contents and a priority order in which the determined decision rule is to be applied, and a search result providing unit configured to provide a search result by arranging the searched contents based on the determined decision rule and application of the priority order of the determined decision rule.

## Description

The present general inventive concept generally relates to a server apparatus and a method for providing a search result thereof, and more particularly, to a server apparatus which rearranges and provides search results searched from different kinds of search domains and a method for providing a search result thereof.

With the development of client apparatuses having different kinds of search domains, for example, a smart television (TV), there is an increasing need for a method for providing a client apparatus with an exact search result. Specially, there is a growing demand for a method of setting a priority order of search results in a search server in response to a search result being inputted from the client apparatus. The method of setting a priority order refers to a method of determining which search domain's search result to be exposed in preference from among different kinds of search domains.

In the related art, there was a method of exposing the search results through an integrated ranking of the search domains or a method of providing the search results according to a priority order of fixed domains. In general, in connection with the method of using the integrated ranking, contents metadata for distinguishing relevancy of search words are transmitted from respective domains, and rankings of the search results are integrated and provided based on the contents metadata.

However, a universal method for arranging the search results of different kinds of domains has not been suggested yet. Specially, in the conventional method of using the contents metadata, there is a problem that a search result of a particular search domain is arranged in a subordinated position according to characteristics of each content. In addition, in case of a fixed priority order, an algorithm may be simplified, while significance of the search results is ignored, and thus, a search quality may be deteriorated.

The present disclosure has been provided to address the aforementioned and other problems and disadvantages occurring in the related art, and an aspect of the present disclosure provides a server apparatus which enables an operator to apply multiple arrangement rules selectively and apply a search result selection history of a user regarding a particular search word and a keyword pattern designated by the operator simultaneously and a method for providing a search result thereof.

According to an exemplary embodiment, there is provided a server apparatus including: a search word processor configured to search for contents related to the search word from a plurality of search domains, a rule application determining unit configured to determine a decision rule to be applied for an arrangement order of the searched contents and a priority order in which the determined decision rule is to be applied, and a search result providing unit configured to provide a search result by arranging the searched contents based on the determined decision rule and application of the priority order of decision rule.

The rule application determining unit may select at least one of a plurality of registered decision rules and set a priority order of application of the selected at least one of the plurality of registered decision rules.

The search result providing unit may arrange the searched contents by applying a subordinated decision rule among selected decision rules and rearrange the searched contents by applying an unsubordinated decision rule among the selected decision rules.

While the selected decision rule is a basic decision rule, the search result providing unit may arrange the searched contents from the plurality of search domains according to a respective order.

While the selected decision rule is a client context decision rule, the search result providing unit may arrange the searched contents by setting preference to contents searched from a search domain in a location from which the search word is received.

The apparatus may further include a keyword storage configured to store a pattern table including a registered pattern. In addition, while the selected decision rule is a pattern decision rule, and a pattern registered in the pattern table is consistent with the search word, the search result providing unit may arrange the searched contents by setting preference to contents searched from a designated search domain.

The apparatus may further include a keyword storage configured to store a log table including a search history. In addition, while the selected decision rule is a history decision rule, the search result providing unit may arrange the searched contents by setting preference to contents searched from a search domain which was most frequently selected from among the plurality of search domains based on the log table.

While other decision rule than the basic decision rule additionally is selected, the rule application determining unit may assign a most subordinated position in application of the priority order to the basic decision rule.

The apparatus may further include a search log server. In addition, while a content is selected from among the search results provided, the search log server may match and store the search word in association with a search domain to which the selected content belongs.

The apparatus may further include a keyword storage configured to store a log table including a search history. In addition, the search log server may update the log table at a predetermined period based on the matched and stored search word and the search domain.

The apparatus may further include a pattern server and a keyword storage configured to store a pattern table including a registered pattern. In addition, the pattern server may register a new pattern input by an operator, designate a search domain for the new pattern, and update the pattern table at a predetermined period.

According to an exemplary embodiment, there is provided a method for providing a search result, the method including: searching for contents related to a search word from a plurality of search domains, determining a decision rule to be applied to arrange the searched contents and a priority order in which the determined decision rule is to be applied, and providing a search result by arranging the searched contents based on the determined decision rule and application of the priority order of the decision rule.

The determining the decision rule may include selecting at least one of a plurality of registered decision rules and setting a priority order of application of the selected decision rule.

The providing of the search result may include arranging the searched contents by applying a subordinated decision rule among selected decision rules and rearranging the searched contents by applying an unsubordinated decision rule among the selected decision rules.

While the selected decision rule is a basic decision rule, the providing of the search result may include arranging the searched contents from the plurality of search domains according to a respective order.

While the selected decision rule is a client context decision rule, the providing of the search result may include arranging the search contents by setting preference to contents searched from a search domain in a location from which the search word is received.

While the selected decision rule is a pattern decision rule, and a pattern registered in a pattern table including a registered pattern is consistent with the search word, the providing of the search result may include arranging the searched contents by setting preference to contents searched from a designated search domain.

While the selected decision rule is a history decision rule, the providing of the search result may include arranging the searched contents by setting preference to contents searched from a search domain which was most frequently selected from among the plurality of search domains based on a log table including a search history.

While other decision rule than the basic decision rule additionally is selected, the determining of the decision rule may include assigning a most subordinated position in application of the priority order to the basic decision rule.

The method may further include matching and storing, while a content is selected from among the search results, the search word with a search domain to which the selected content belongs and updating a log table including a search history at a predetermined period based on the matched and stored keyword and search domain.

According to above described various exemplary embodiments, a search ranking determining policy may be applied flexibly according to characteristics of a search domain thereby enhancing a search quality.

The above and/or other aspects of the present inventive concept will be more apparent by describing certain exemplary embodiments of the present inventive concept with reference to the accompanying drawings, in which:
FIG. 1 is a block diagram schematically illustrating a structure of a server apparatus according to an exemplary embodiment;
FIG. 2 is a block diagram specifically illustrating a structure of a server apparatus according to an exemplary embodiment;
FIG. 3 is a view provided to describe a method of applying a plurality of decision rules in a server apparatus according to an exemplary embodiment;
FIG. 4 is a view provided to describe an example where search results are rearranged as a client context decision rule is applied according to an exemplary embodiment;
FIG. 5 is a view illustrating a pattern table according to an exemplary embodiment;
FIG. 6 is a flowchart provided to describe a method for providing a search result of a server apparatus according to an exemplary embodiment; and
FIG. 7 is a sequence view provided to describe a method for providing a search result of a server apparatus according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

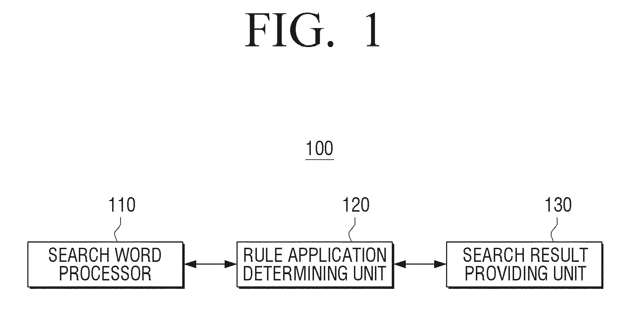

FIG. 1 is a block diagram schematically illustrating a structure of a server apparatus according to an exemplary embodiment. Referring to FIG. 1, a server apparatus 100 includes a search word processor 110, a rule application determining unit 120, and a search result providing unit 130.

In response to a search word being inputted, the search word processor 110 searches for contents related to the search word. For example, in response to a search word being requested by a client apparatus 200, the search word processor 110 searches for the contents related to the search word from a plurality of search domains 170.

The client apparatus 200 may be realized as diverse apparatuses, such as, a smart TV, a smart phone, a tablet Personal Computer (PC), etc., which is capable of requesting for a search operation to different kinds of search domains. Hereinafter, the client apparatus 200 will be described as a smart TV, but embodiments of the invention are not limited thereto.

The rule application determining unit 120 may store decision rules to be applied to determine an arrangement order of the searched contents. For example, the rule application determining unit 120 may store decision rules such as a basic decision rule, a client context decision rule, a pattern decision rule, a history decision rule, etc.

The basic decision rule refers to a decision rule for arranging the contents searched from a plurality of search domains for respective search domains according to a predetermined order. The client context decision rule refers to a decision rule for arranging the contents searched from a search domain in a location where the client apparatus 200 tried to perform a search operation in preference. For example, in response to a search word being received while a user browses an application market through a smart TV, the client context decision rule arranges the contents searched from an application search domain in preference.

The pattern decision rule refers to a decision rule for arranging the contents searched from a designated search domain in preference in response to a keyword registered as a pattern by an operator 300 being consistent with a search word. The history decision rule refers to a decision rule for determining search domains to be arranged in preference based on a history of being searched and selected in the past from among the plurality of client apparatuses 200. Accordingly, a user's search history is considered with other users' search history, and thus, a search quality may be enhanced.

The rule application determining unit 120 may apply a part or all of the registered decision rules to determine the arrangement order of the contents. In addition, the rule application determining unit 120 may set a priority order of decision rule application of the decision rules to be applied. According to an exemplary embodiment, in response to other decision rule than the basic decision rule additionally being selected, the rule application determining unit 120 may assign the most subordinated position in the priority order to the basic decision rule.

The search result providing unit 130 arranges the searched contents and provides search results based on the decision rule and the priority order of decision rule application decided in the rule application determining unit 120. According to an exemplary embodiment, in response to a plurality of decision rule being selected, the search result providing unit 130 arranges the searched contents by applying a subordinated decision rule first. Subsequently, the search result providing unit 130 rearranges the searched contents by applying a unsubordinated decision rule. The search result providing unit 130 provides the client apparatus 200 with the search results arranged after the most unsubordinated decision rule is applied.

In the above-described server apparatus 100, as the plurality of decision rules are applied selectively, the sever apparatus 100 may provide the client apparatus 200 with a high-quality search result even in an environment where it is difficult to provide an arrangement method optimized to the searched contents.

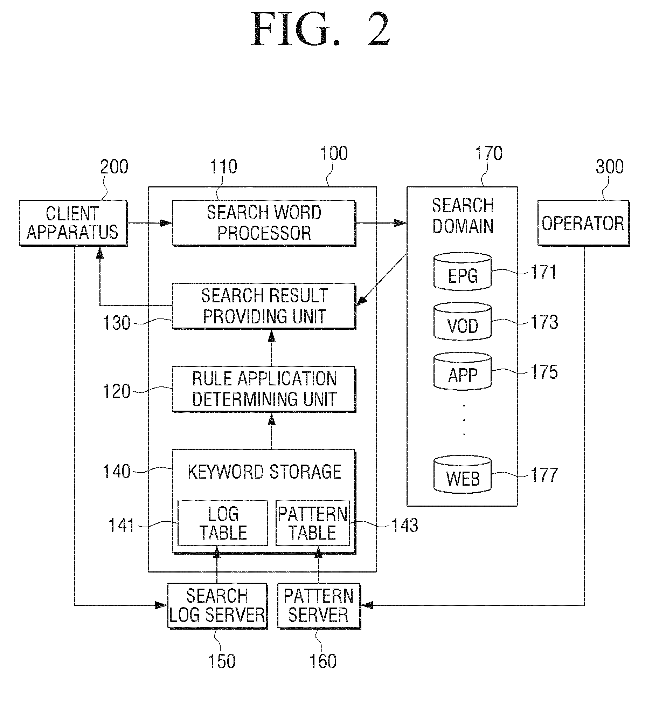

FIG. 2 is a block diagram specifically illustrating a structure of a server apparatus according to an exemplary embodiment. Referring to FIG. 2, the server apparatus 100 includes the search word processor 110, the rule application determining unit 120, the search result providing unit 130, and a keyword storage 140. Other than the above, the server apparatus 100 may further include a search log server 150, a pattern server 160, and a search domain 170 as components thereof. The search log server 150, the pattern server 160, and the search domain 170 may be realized as a separate server outside the server apparatus 100.

The search word processor 110 is requested a search word by the client apparatus 200. The search word processor 110 searches for the contents related to the search word from the plurality of search domains 170.

The search domain 170 may be realized as a storage where the contents are classified and stored inside the server apparatus 100 or may be realized as a content providing server which exists outside the server apparatus 100. The search domain 170 includes different kinds of search domains. For example, the search domain 170 may be an Electronic Program Guide (EPG) search domain 171, a Video On Demand (VOD) search domain 173, an application (APP) search domain 175, and a website (WEB) search domain 177.

For example, in response to a search word 'Star Wars' being requested by the client apparatus 200, the search word processor 110 may search for a TV channel and a broadcasting time of the 'Start Wars' from the EPG search domain 171. In addition, the search word processor 110 may search for information, such as, VOD information and a price of the 'Star Wars' from the VOD search domain 173 and may search for information on a game application related to the 'Star Wars' from the APP search domain 175. The search word processor 110 may also search for an address of an official web site of the 'Star Wars' from the WEB search domain 177.

As described above, the search word processor 110 searches for the contents related to the search word from the plurality of search domains. In connection with the contents searched in the search word processor 110, the search results are arranged for respective search domains and provided to the client apparatus 200 through the rule application determining unit 120, the search result providing unit 130, and the like.

In the rule application determining unit 120, the decision rules to be applied to determine an arrangement order of the searched contents may be registered. The rule application determining unit 120 may select at least one of the plurality of registered decision rules. In addition, the rule application determining unit 120 may set a priority order of decision rule application of the selected decision rule.

For example, four types of decision rule, the basic decision rule, the client context decision rule, the pattern decision rule, and the history decision rule may be registered in the rule application determining unit 120. The rule application determining unit 120 may select only the basic decision rule and the pattern decision rule and apply the selected decision rules to determine the arrangement order of the searched contents. In addition, the rule application determining unit 120 may set the priority order of decision rule application of the selected basic decision rule and pattern decision rule.

Accordingly to an exemplary embodiment, the rule application determining unit 120 may allow the basic decision rule to be selected necessarily. In response to other decision rule being selected with the basic decision rule, the rule application determining unit 120 may assign the most subordinated position in the priority order of decision rule application to the basic decision rule in order to provide a minimum decision rule. In addition, as the rule application determining unit 120 prioritizes other decision rule than the basic decision rule, for example, the history decision rule, it is possible to provide a more exact search result that the user intended.

The search result providing unit 130 rearranges the searched contents based on the decision rule and the priority order of decision rule application decided in the rule application determining unit 120. Upon completion of rearrangement, the search result providing unit 130 provides the client apparatus 200 with the search results.

According to an exemplary embodiment, the search result providing unit 130 applies the decision rules from the subordinated decision rule from among the plurality of decision rules selected by the rule application determining unit 120. In addition, the search result determining unit rearranges the searched results which were arranged according to the subordinated decision rule by applying the unsubordinated decision rule. That is, the search result providing unit 130 applies the decision rules to the searched results in a reverse order of the priority order of decision rule application.

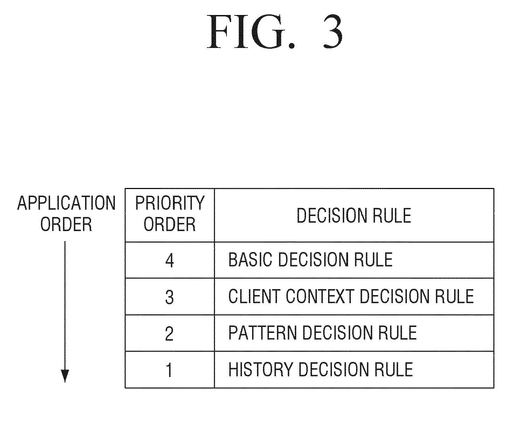

FIG. 3 is a view provided to describe a method of applying a plurality of decision rules in a server apparatus according to an exemplary embodiment. Hereinafter, an application order of the decision rules and respective decision rules will be described.

For example, in response to four types of decision rules being applied as illustrated in FIG. 3, the basic decision rule in the fourth position in the priority order of decision rule application is applied first. In this case, it is desirable to apply the basic decision rule requisitely. The search result providing unit 130 arranges the contents searched from the plurality of search domains for respective search domains according to a predetermined order by applying the basic decision rule. For example, in response to the searched contents being set so as to be arranged in the order of the EPC search domain 171, the APP search domain 175, the VOD search domain 173, and the WEB search domain 177, the search result providing unit 130 arranges the searched contents in the order of EPG-APP-VOD-WEB. The arrangement order according to the search domains may be set in the server apparatus 100 or may be set based on information transmitted from the client apparatus 200 along with the search word. Alternatively, the arrangement order according to the search domains may be set by the operator 300.

Subsequently, the search result providing unit 130 applies the client context decision rule in the third position to the search results arranged according to the basic decision rule in the forth position. The search result providing unit 130 arranges the contents searched from a search domain in a location where the client apparatus 200 tried to a search operation in preference.

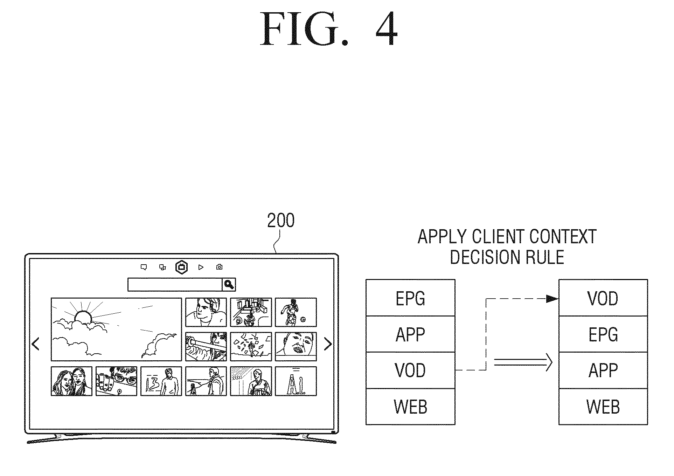

FIG. 4 is a view provided to describe an example where search results are rearranged as a client context decision rule is applied by the search result providing unit 130. Referring to FIG. 4, the searched contents are arranged in the order of EPG-APP-VOD-WEB according to the basic decision rule in the fourth position. The client apparatus 200 being realized as a smart TV displays a VOD search screen. The client apparatus 200 may provide the server apparatus 100 with a search location of a user along with the search word inputted by the user. The client context decision rule is a decision rule which reflects the characteristic that a type of content in which a user is interested may be obtained from a search location of the user. In FIG. 4, the search result providing unit 130 rearranges the contents searched from the VOD search domain 173 so as to be located at the top of the search results based on that the search location of the user is the VOD search screen. That is, the search result providing unit 130 rearranges the search results arranged in the order of EPG-APP-VOD-WEB to be in the order of VOD-EPG-APP-WEB.

As another example where the client context decision rule is applied, in response to the search location being a location for searching for an application such as an application market, the search result providing unit 130 may rearrange the contents related to the application searched from the APP search domain 175 to be located at the top of the search results.

Referring to FIG. 3, the search result providing unit 130 applies the pattern decision rule in the second position to the search results arranged according to the client context decision rule in the third position. In response to a pattern registered in a pattern table 143 being consistent with the search word, the search result providing unit 130 rearranges the search results so that the content searched from the designated search domain are exposed in preference.

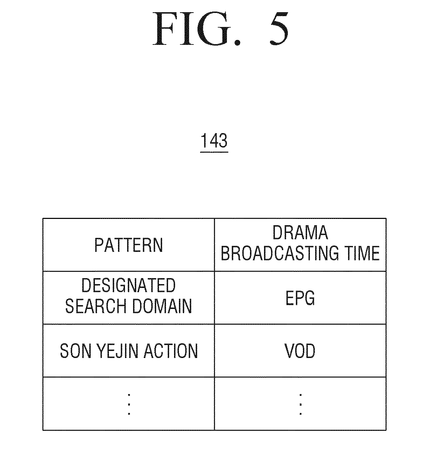

The keyword storage 140 stores the pattern table 143 including a registered pattern. The pattern refers to a keyword registered by the operator 300. The pattern table 143 includes a pattern and a designated search domain which matches the pattern. FIG. 5 is a view illustrating an example of the pattern table 143. The pattern may be a single search word or may consist of a plurality of search words as illustrated in FIG. 5.

For example, in response to a plurality of search words 'drama' and 'broadcasting time' being inputted, it may be determined that the user requests for a search operation with respect to a drama broadcasting time content provided by the EPG. Accordingly, the operator 300 may register a search word where 'drama' and 'broadcasting time' are combined as a pattern in advance. As another example, as an actress name 'Son Yejin' and a move genre name 'action' are combined, a pattern of which designated search domain is a VOD search domain may be registered.

In response to a search word being requested by the client apparatus 200, the search result providing unit 130 compares the search word with the pattern table 143 and determines whether the search word is consistent with the pattern. In response to determining that the search word is consistent with the pattern, the search result providing unit 130 rearranges the search results so that the content searched from the designated search domain matched with the registered pattern is exposed in preference. For example, in response to a search word 'drama broadcasting time' being inputted, the search result providing unit 130 compares the search word with the pattern table 143 and rearranges the search results so that the content searched from the EPG search domain 171 is arranged at the top. As another example, in response to a search word 'Son Yejin action' being inputted, the search result providing unit 130 rearranges the search results so that the content searched from the VOD search domain 173 is arranged at the top.

According to an exemplary embodiment, a pattern server 160 may register a new pattern inputted by a user and designate a search domain for the new pattern. In addition, the pattern server 160 may update the pattern table 143 according to a predetermined period. As another example, the pattern table 143 may be updated by the method of directly registering a new pattern in the keyword storage 140 without any separate pattern server 160.

Referring to FIG. 3, the search result providing unit 130 applies the history decision rule in the first position to the search results arranged according to the pattern decision rule in the second position. The search result providing unit 130 arranges the content searched from a search domain which was selected the most frequently in preference based on a log table 141.

According to an exemplary embodiment, in response to a particular content being selected by the client apparatus 200 from among the search results provided by the server apparatus 100, the search log server 150 matches and stores a search word and a search domain to which the selected particular content belongs. The search log server 150 receives and stores a search history from the plurality of client apparatuses 200. In addition, the search log server 150 updates the log table 141 according to a predetermined period. That is, in the log table 141, a search history of a user of other client apparatus is registered along with the search history of the user of the client apparatus 200. Accordingly, the search result providing unit 130 may apply the arrangement order verified by other user by using the log table 141.

The search result providing unit 130 applies the entire decision rules including the most unsubordinated decision rule and then provides the client apparatus 200 with the arranged search results. For example, in FIG. 3, the search result providing unit 130 provides the client apparatus 200 with the search results which are finally arranged after the history decision rule is applied.

According to the server apparatus 100 as described above, a plurality of decision rules may be applied selectively, thereby providing an optimized search result.

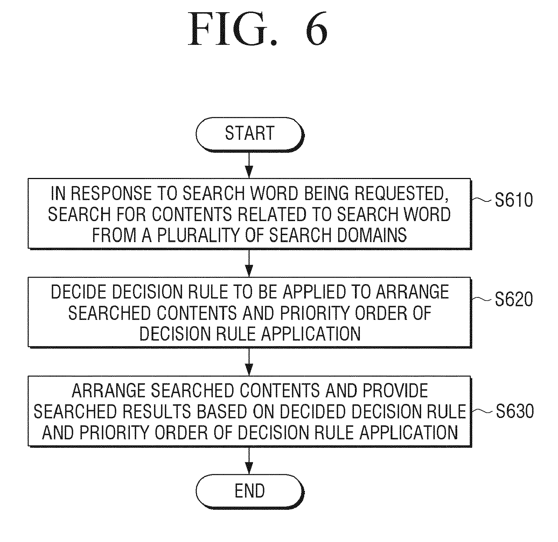

FIG. 6 is a flowchart provided to describe a method for providing a search result of a server apparatus according to an exemplary embodiment. In response to a search word being requested by the client apparatus, the server apparatus 100 searches for contents related to the search word from a plurality of search domains (S610).

Subsequently, the server apparatus 100 decides a decision rule to be applied to arrange the searched contents. In addition, the server apparatus 100 determines a priority order of decision rule application (S620). According to an exemplary embodiment, the server apparatus 100 may select at least one of a plurality of registered decision rules. In addition, the server apparatus 100 may determine a priority order of decision rule application of the selected decision rule. The decision rule to be applied to the server apparatus 100 may include a basic decision rule, a client context decision rule, a pattern decision rule, and a history decision, but embodiments of the invention are not limited thereto.

According to another exemplary embodiment, the server apparatus 100 selects the basic decision rule requisitely. In response to other decision rule than the basic decision rule additionally being selected, the server apparatus 100 may assign the most subordinated position in the priority order of decision rule application to the basic decision rule. For example, in response to the basic decision rule and the history decision rule being selected, the server apparatus 100 assigns the first position to the history decision rule and assigns the second position to the basic decision rule.

The server apparatus 100 arranges the searched contents and provides the client apparatus 200 with the searched results based on the decided decision rule and the priority order of decision rule application (S630). In response to a plurality of decision rules being selected, the server apparatus 100 arranges the searched contents by applying the subordinated decision rule first. Subsequently, the server apparatus 100 rearranges the searched content by applying the unsubordinated decision rule from among the plurality of decision rules. Accordingly, the server apparatus 100 provides the search results to which the most unsubordinated decision rule was applied finally.

According to an exemplary embodiment, in response to the selected decision rule being the basic decision rule, the server apparatus 100 arranges the contents searched from the plurality of search domains for respective search domains according to a predetermined order. According to another exemplary embodiment, in response to the selected decision rule being the client context decision rule, the server apparatus 100 arranges the contents searched from the search domain where the client apparatus tried to perform a search operation in preference.

According to an exemplary embodiment, in response to the selected decision rule being the pattern decision rule, the server apparatus 100 determines whether the pattern registered in the pattern table is consistent with the search word requested by the client apparatus 200. In response to determining that the pattern registered in the pattern table is consistent with the search word requested by the client apparatus 200, the server apparatus 100 arranges the contents searched from the designated search domain matched with the pattern in preference. In addition, a pattern server 160 outside the server apparatus 100 may register a new pattern inputted by the operator and designate a search domain for the new pattern. The pattern server 160 updates the pattern table of the server apparatus 100 according to a predetermined period.

According to another exemplary embodiment, in response to the selected decision rule being the history decision rule, the server apparatus 100 arranges the contents searched from the search domain which was selected the most frequently in preference based on the log table including the search history. In response to a particular content being selected by the client apparatus from among the provided search results, the server apparatus 100 may match and store the search word with a search domain to which the selected particular content belongs. The server apparatus 100 may update the log table according to a predetermined period based on the matched and stored search word and search domain. As another example, a search log server 150 outside the server apparatus 100 may match and store the search word and the search domain to which the particular content belongs. In this case, the search log server 150 updates the log table according to the predetermined period.

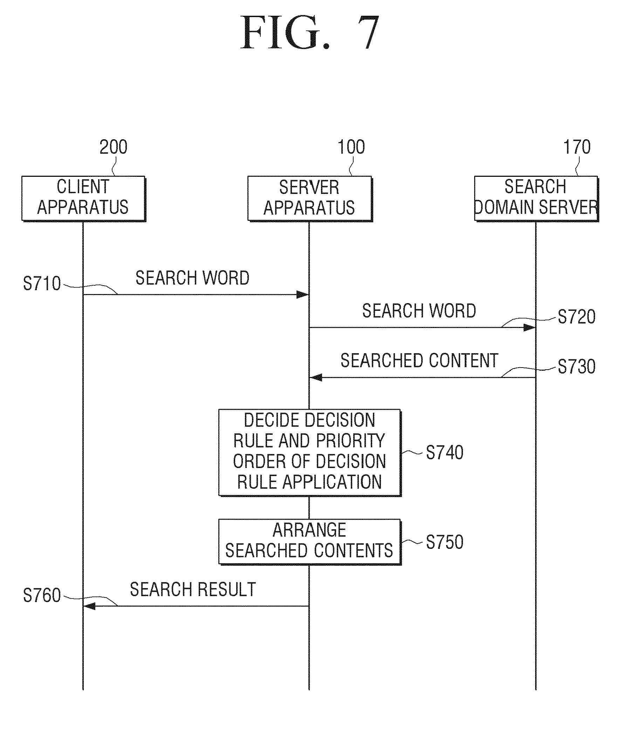

FIG. 7 is a sequence view provided to describe a method for providing a search result of a server apparatus according to an exemplary embodiment. In FIG. 7, a search domain server 170 exists outside the server apparatus 100, but embodiments of the invention are not limited thereto. That is, the server apparatus 100 may include a storage which provides a search content autonomously inside the server apparatus 100 so as to perform a function of the search domain server 170.

The server apparatus 100 is requested a search word from the client apparatus 200 and searches for contents related to the search word from the search domain 170. That is, the client apparatus 200 transmits a search word to the server apparatus 200 to request for a search operation (S710). The server apparatus 100 searches for the contents related to the search word from the search domain sever 170 (S720). The search domain server 170 provides the server apparatus 100 with the searched contents (S730). The searched contents are classified and provided for respective search domains.

The server apparatus 100 decides a decision rule to be applied to determine an arrangement order of the searched contents for respective search domains and a priority order of decision rule application (S740). In order to prevent the overlapped description, the detailed description on the operation of deciding the decision rule and the priority order of decision rule application is omitted.

The server apparatus 100 arranges the contents by applying the decided decision rules according to the priority order of application of each decision rule (S750). For example, the server apparatus 100 may apply the decision rules in a reverse order of the priority order of decision rule application. That is, the server apparatus 100 arranges the contents by applying the most subordinated decision rule first and rearranges the contents by applying the other unsubordinated decision rules one by one. Subsequently, the server apparatus 100 provides the client apparatus 200 with the search results finally arranged after the most unsubordinated is applied (S760).

As the plurality of decision rules are applied flexibly through the method for providing the search result of the server apparatus 100, it is possible to provide the client apparatus 200 with a search result where a content which meets a search intention of a user is exposed first.

In addition, a program code for executing the method for providing the search result according to above-described various exemplary embodiments may be stored in diverse types of recording medium. To be specific, the program code may be stored in various types of machine-readable recording medium such as a Random Access Memory (RAM), a flash memory, a Read Only Memory (ROM), an Erasable Programmable ROM (EPROM), an Electronically Erasable and Programmable ROM (EEPROM), a register, a hard disk, a removable disk, a memory card, a universal serial bus (USB) memory, a Compact Disk (CD)-ROM, etc.

The foregoing exemplary embodiments and advantages are merely exemplary and are not to be construed as limiting the present inventive concept. The present teaching can be readily applied to other types of devices. Also, the description of the exemplary embodiments is intended to be illustrative, and not to limit the scope of the claims, and many alternatives, modifications, and variations will be apparent to those skilled in the art.

## Claims

1. A server apparatus, comprising:
a search word processor configured to search for contents related to a search word from a plurality of search domains;
a rule application determining unit configured to determine a decision rule to be applied for an arrangement order of the searched contents and a priority order in which the determined decision rule is to be applied; and
a search result providing unit configured to provide a search result by arranging the searched contents based on the determined decision rule and application of the priority order of the determined decision rule.

2. The server apparatus as claimed in claim 1, wherein the rule application determining unit is arranged to select at least one of a plurality of registered decision rules and sets a priority order of application of the selected at least one of the plurality of registered decision rules.

3. The server apparatus as claimed in claim 1 or 2, wherein the search result providing unit is arranged to arrange the searched contents by applying a subordinated decision rule among selected decision rules and rearranges the searched contents by applying an unsubordinated decision rule among the selected decision rules.

4. The server apparatus as claimed in claim 2 or 3, wherein while the selected decision rule is a basic decision rule, the search result providing unit is arranged to arrange the searched contents from the plurality of search domains according to a respective order.

5. The server apparatus as claimed in any one of claims 2 to 4, wherein while the selected decision rule is a client context decision rule, the search result providing unit is arranged to arrange the searched contents by setting preference to contents searched from a search domain in a location from which the search word is received.

6. The server apparatus as claimed in any one of claims 2 to 5, further comprising:
a keyword storage configured to store a pattern table including a registered pattern,
wherein while the selected decision rule is a pattern decision rule, and a pattern registered in the pattern table is consistent with the search word, the search result providing unit is arranged to arrange the searched contents by setting preference to contents searched from a designated search domain.

7. The server apparatus as claimed in any one of claims 2 to 6, further comprising:
a keyword storage configured to store a log table including a search history,
wherein while the selected decision rule is a history decision rule, the search result providing unit is arranged to arrange the searched contents by setting preference to contents searched from a search domain which was most frequently selected from among the plurality of search domains based on the log table.

8. The server apparatus as claimed in claim 4 or any claim dependent on claim 4, wherein while another decision rule than the basic decision rule additionally is selected, the rule application determining unit is arranged to assign a most subordinated position in application of the priority order to the basic decision rule.

9. The server apparatus as claimed in any one of claims 1 to 8, further comprising:
a search log server,
wherein the search result is included in search results, and while a content is selected from among the search results provided, the search log server is arranged to match and store the search word in association with a search domain to which the selected content belongs.

10. The server apparatus as claimed claim 9, further comprising:
a keyword storage configured to store a log table including a search history,
wherein the search log server is arranged to update the log table at a predetermined period based on the matched and stored search word and the search domain.

11. The server apparatus as claimed in any one of claims 1 to 10, further comprising:
a pattern server; and
a keyword storage configured to store a pattern table including a registered pattern,
wherein the pattern server is arranged to register a new pattern input by an operator, to designate a search domain for the new pattern, and to update the pattern table at a predetermined period.

12. A method for providing a search result, the method comprising:
searching for contents related to a search word from a plurality of search domains;
determining a decision rule to be applied to arrange the searched contents and a priority order in which the determined decision rule is to be applied; and
providing a search result by arranging the searched contents based on the determined decision rule and application of the priority order of the decision rule.

13. The method as claimed in claim 12, wherein the determining of the decision rule comprises:
selecting at least one of a plurality of registered decision rules; and setting a priority order of application of the selected decision rule.

14. The method as claimed in claim 12 or claim 13, wherein the providing of the search result comprises:
arranging the searched contents by applying a subordinated decision rule among selected decision rules and rearranging the searched contents by applying an unsubordinated decision rule among the selected decision rules.

15. The method as claimed in claim 13 or 14, wherein while the selected decision rule is a basic decision rule, the providing of the search result comprises arranging the searched contents from the plurality of search domains according to a respective order.
